# EUROPÄISCHE PATENTSCHRIFT

(11) **EP 2 049 597 B1**
(45) Veröffentlichungstag und Bekanntmachung des Hinweises auf die Patenterteilung: **24.02.2010**
(21) Anmeldenummer: 07787618.3
(22) Anmeldetag: 17.07.2007
(51) Int. Cl.: C08L 77/00, C08L 77/06, C08L 51/06

(54) **THERMOPLASTISCHE FORMMASSEN MIT HOHER STEIFIGKEIT**
THERMOPLASTIC MOULDING COMPOSITIONS WITH HIGH STIFFNESS
MATIÈRES THERMOPLASTIQUES POUR MOULAGE PRÉSENTANT UNE GRANDE RIGIDITÉ

(30) Priorität: 26.07.2006 EP 06117853
(43) Veröffentlichungstag der Anmeldung: 22.04.2009
(73) Patentinhaber: BASF SE, 67056 Ludwigshafen (DE)
(72) Erfinder: WEBER, Martin, 67487 Maikammer (DE); HOPFENSPIRGER, Xaver, 67454 Hassloch (DE); FUNKHAUSER, Steffen, 68519 Viernheim (DE); HECKMANN, Walter, 69469 Weinheim (DE); SCHNORR, Jörg, 67071 Ludwigshafen (DE); FERNANDEZ RODILES, Raquel, 68161 Mannheim (DE); KLENZ, Rainer, 67454 Hassloch (DE); STAWITZKI, Hagen, 76137 Karlsruhe (DE)
(86) Internationale Anmeldenummer: PCT/EP2007/057352
(87) Internationale Veröffentlichungsnummer: WO 2008/012233

(56) Entgegenhaltungen:
- WO-A-2004/083303
- FR-A- 2 847 902

## Beschreibung

Die vorliegende Erfindung betrifft thermoplastische Formmassen, enthaltend
A) 40 bis 96,2 Gew.-% eines teilaromatischen Polyamids,
B) 2 bis 30 Gew.-% eines schlagzähmodifizierenden Polymeren, welches funktionelle Gruppen enthält,
C) 1 bis 50 Gew.-% faser- oder teilchenförmiger Füllstoffe oder deren Mischungen
D) 0,2 bis 5 Gew.-% eines Schmiermittels,
E) 0,5 bis 15 Gew.-% eines elektrisch leitfähigen Additivs,
F) 0 bis 30 Gew.-% weiterer Zusatzstoffe,
wobei die Summe der Gewichtsprozente der Komponenten A) bis F) 100 % ergibt.

Außerdem betrifft die vorliegende Erfindung die Verwendung derartiger Formmassen zur Herstellung von Formkörpern jeglicher Art und die hierbei erhältlichen Formkörper, vorzugsweise Kfz-Karosserieteile jeglicher Art.

Polymerblends auf Basis von Polyamiden und Polyphenylenethern finden aufgrund ihrer hohen Wärmeformbeständigkeit Verwendung als Werkstoff für Karosserieteile. Solche Produkte werden z.B. von der Fa. GEP als Noryl®GTX vertrieben. Nachteilig für die Verwendung als Karosseriewerkstoff ist der vergleichsweise hohe Abfall der Steifigkeit unter Umgebungsbedingungen.

In der DE-A 101 49 152 werden thermoplastische Formmassen auf Basis von Polyamiden, Pfropfkautschuken vom ABS-Typ und feinteiligen Füllstoffen als Werkstoff für Karosserieteile beschrieben. Solche Produkte werden z.B. von der Fa. Bayer unter dem Produktnamen Triax® vermarktet. Während die Steifigkeit dieser Produkte höher als von Noryl®GTX ist, ist die Zähigkeit dieses Materials in den meisten Fällen nicht ausreichend.

Aus der WO 2004/056919 sind leitfähige thermoplastische Formmassen bekannt, die Mischungen verschiedener Leitfähigkeitszusätze enthalten.

Nachteilig bei den bekannten Formmassen ist, dass diese aufgrund des hohen Polyamidanteils Feuchtigkeit aufnehmen, was zu einem massiven Abfall der Steifigkeit solcher Produkte führt.

WO 2004/083 303 beschreibt eine Polyamidformmasse, die ein thermoplastisches Polyamid und die Komponenten B bis E enthält.

Aufgabe der vorliegenden Erfindung war daher, thermoplastische Formmassen zur Verfügung zu stellen, die im Vergleich zum Stand der Technik hohe Wärmeformbeständigkeit, gute Zähigkeit und einen geringen Abfalle der Steifigkeit bei Feuchteaufnahme zeigen.

Diese Aufgabe wird durch die eingangs definierten Formmassen erfüllt. Bevorzugte Ausführungsformen sind den Unteransprüchen zu entnehmen.

Als Komponente A) enthalten die erfindungsgemäßen Formmassen 40 bis 96,2, vorzugsweise 45 bis 93,75 und insbesondere 45 bis 91,2 Gew.-% mindestens eines teilaromatischen Polyamides.

Bevorzugt sind solche teilaromatischen Copolyamide wie PA 6/6T und PA 66/6T, deren Triamingehalt weniger als 0,5, vorzugsweise weniger als 0,3 Gew.-% beträgt (siehe EP-A 299 444).

Die Herstellung der bevorzugten teilaromatischen Copolyamide mit niedrigem Triamingehalt kann nach den in den EP-A 129 195 und 129 196 beschriebenen Verfahren erfolgen.

Als Komponente A) enthalten die erfindungsgemäßen thermoplastischen Formmassen mindestens ein teilaromatisches Copolyamid mit dem im folgenden beschriebenen Aufbau:

Die teilaromatischen Copolyamide A) enthalten als Komponente a₁) 40 bis 90 Gew.-% Einheiten, die sich von Terephthalsäure und Hexamethylendiamin ableiten. Ein geringer Anteil der Terephthalsäure, vorzugsweise nicht mehr als 10 Gew.-% der gesamten eingesetzten aromatischen Dicarbonsäuren können durch Isophthalsäure oder andere aromatische Dicarbonsäuren, vorzugsweise solche, in denen die Carboxylgruppen in para-Stellung stehen, ersetzt werden.

Neben den Einheiten, die sich von Terephthalsäure und Hexamethylendiamin ableiten, enthalten die teilaromatischen Copolyamide Einheiten, die sich von ε-Caprolactam ableiten (a₂) und/oder Einheiten, die sich von Adipinsäure und Hexamethylendiamin (a₃) ableiten.

Der Anteil an Einheiten, die sich von ε-Caprolactam ableiten, beträgt maximal 50 Gew.-%, vorzugsweise 20 bis 50 Gew.-%, insbesondere 25 von 40 Gew.-%, während der Anteil an Einheiten, die sich von Adipinsäure und Hexamethylendiamin ableiten, bis zu 60 Gew.-%, vorzugsweise 30 bis 60 Gew.-% und insbesondere 35 bis 55 Gew.-% beträgt.

Die Copolyamide können auch sowohl Einheiten von ε-Caprolactam als auch Einheiten von Adipinsäure und Hexamethylendiamin enthalten; in diesem Fall ist darauf zu achten, dass der Anteil an Einheiten, die frei von aromatischen Gruppen sind, mindestens 10 Gew.-% beträgt, vorzugsweise mindestens 20 Gew.-%. Das Verhältnis der Einheiten, die sich von ε-Caprolactam und von Adipinsäure und Hexamethylendiamin ableiten, unterliegt dabei keiner besonderen Beschränkung.

Als besonders vorteilhaft für viele Anwendungszwecke haben sich Polyamide mit 50 bis 80, insbesondere 60 bis 75 Gew.-% Einheiten, die sich von Terephthalsäure und Hexamethylendiamin ableiten (Einheiten a₁)) und 20 bis 50, vorzugsweise 25 bis 40 Gew.-% Einheiten, die sich von ε-caprolactam ableiten (Einheiten a₂)), erwiesen.

Neben den vorstehend beschriebenen Einheiten a₁) bis a₃) können die erfindungsgemäßen teilaromatischen Copolyamide noch untergeordnete Mengen, vorzugsweise nicht mehr als 15 Gew.-%, insbesondere nicht mehr als 10 Gew.-% an weiteren Polyamidbausteinen (a₄) enthalten, wie sie von anderen Polyamiden bekannt sind. Diese Bausteine können sich von Dicarbonsäuren mit 4 bis 16 Kohlenstoffatomen und aliphatischen oder cycloaliphatischen Diaminen mit 4 bis 16 Kohlenstoffatomen sowie von Aminocarbonsäuren bzw. entsprechenden Lactamen mit 7 bis 12 Kohlenstoffatomen ableiten. Als geeignete Monomere dieser Typen seien hier nur Suberinsäure, Azelainsäure, Sebacinsäure oder Isophthalsäure als Vertreter der Dicarbonsäuren, 1,4-Butandiamin, 1,5-Pentandiamin, Piperazin, 4,4'-Diaminodicyclohexylmethan, 2,2-(4,4'-Diaminodicyclohexyl)propan oder 3,3'-Dimethyl-4,4'-Diaminodicyclohexylmethan als Vertreter der Diamine und Capryllactam, Önanthlactam, Omega-Aminoundecansäure und Laurinlactam als Vertreter von Lactamen bzw. Aminocarbonsäuren genannt.

Die Schmelzpunkte der teilaromatischen Copolyamide A) liegen im Bereich von 260 bis über 300°C, wobei dieser hohe Schmelzpunkt auch mit einer hohen Glasübergangstemperatur von in der Regel mehr als 75, insbesondere mehr als 85°C verbunden ist.

Binäre Copolyamide auf der Basis von Terephthalsäure, Hexamethylendiamin und ε-Caprolactam weisen bei Gehalten von etwa 70 Gew.-% an Einheiten, die sich von Terephthalsäure und Hexamethylendiamin ableiten, Schmelzpunkte im Bereich von 300°C und eine Glasübergangstemperatur von mehr als 110°C auf.

Binäre Copolyamide auf der Basis von Terephthalsäure, Adipinsäure und Hexamethylendiamin (HMD) erreichen bereits bei niedrigeren Gehalten von etwa 55 Gew.-% Einheiten aus Terephthalsäure und Hexamethylendiamin Schmelzpunkte von 300°C und mehr, wobei die Glasübergangstemperatur nicht ganz so hoch liegt wie bei binären Copolyamiden, die anstelle von Adipinsäure bzw. Adipinsäure/HMD ε-Caprolactam enthalten.

Die Herstellung der teilaromatischen Copolyamide A) kann z.B. nach dem in den EP-A 129 195 und EP-A 129 196 sowie EP-A 299 444 beschriebenen Verfahren erfolgen.

Die Viskositätszahl, gemessen als 0,5 %ige Lösung (0,5 g/100 ml) in 96 Gew.-% H₂SO₄ bei 23°C, beträgt im allgemeinen von 100 bis 300, vorzugsweise 110 bis 250 ml/g gemäß ISO 307.

Es können auch Mischungen obiger Polyamide eingesetzt werden.

Als Komponente B) enthalten die erfindungsgemäßen Formmassen 2 bis 30, vorzugsweise 3 bis 25 und insbesondere 4 bis 20 Gew.-% eines schlagzähmodifizierenden Polymeren (auch als Kautschuk oder Elastomer bezeichnet).

Kautschuke, die die Zähigkeit von Polyamiden erhöhen, weisen im allgemeinen zwei wesentliche Merkmale auf: sie enthalten einen elastomeren Anteil, der eine Glastemperatur von weniger als -10°C, vorzugsweise von weniger als -30°C aufweist, und sie enthalten mindestens eine funktionelle Gruppe, die mit dem Polyamid wechselwirken kann. Geeignete funktionelle Gruppen sind beispielsweise Carbonsäure-, Carbonsäureanhydrid-, Carbonsäureester-, Carbonsäureamid-, Carbonsäureimid-, Amino-, Hydroxyl-, Epoxid-, Urethan- und Oxazolingruppen.

Der Anteil der funktionellen Gruppen beträgt 0,1 bis 5, vorzugsweise 0,2 bis 4 und insbesondere 0,3 bis 3,5 Gew.-%, bezogen auf 100 Gew.-% B).

Bevorzugte Kautschuke auf α-Olefin Basis sind aus folgenden Komponenten aufgebaut:
B₁) 40 bis 100 Gew.-% mindestens eines α-Olefins mit 2 bis 8 C-Atomen,
B₂) 0 bis 90 Gew.-% eines Diens,
B₃) 0 bis 45 Gew.-% eines C₁-C₁₂-Alkylesters der Acrylsäure oder Methacrylsäure oder Mischungen derartiger Ester,
B₄) 0 bis 40 Gew.-% einer ethylenisch ungesättigten Mono- oder Dicarbonsäure oder einem funktionellen Derivat einer solchen Säure,
B₅) 0 bis 40 Gew.-% eines Epoxygruppen enthaltenden Monomeren,
B₆) 0 bis 5 Gew.-% sonstiger radikalisch polymerisierbaren Monomerer,
mit der Maßgabe, dass die Komponente (B) kein Olefinhomopolymerisat ist, denn hiermit, z.B. mit Polyethylen, erzielt man die vorteilhaften Wirkungen nicht in gleichem Maße.

Als erste bevorzugte Gruppe sind die sogenannten Ethylen-Propylen-(EPM)- bzw. Ethylen-Propylen-Dien-(EPDM)-Kautschuke zu nennen, die vorzugsweise ein Verhältnis von Ethylen- zu Propyleneinheiten im Bereich von 40:60 bis 90:10 aufweise.

Die Mooney-Viskositäten (MLI+4/100°C) solcher, vorzugsweise unvernetzter, EPM- bzw. EPDM-Kautschuke (Gelgehalte im allgemeinen unter 1 Gew.-%) liegen bevorzugt im Bereich von 25 bis 100, insbesondere von 35 bis 90 (gemessen am großen Rotor nach 4 Minuten Laufzeit bei 100°C nach DIN 53 523).

EPM-Kautschuke haben im allgemeinen praktisch keine Doppelbindungen mehr, während EPDM-Kautschuke 1 bis 20 Doppelbindungen/100 C-Atome aufweisen können.

Als Dien-Monomere B₂) für EPDM-Kautschuke seien beispielsweise konjugierte Diene wie Isopren und Butadien, nicht-konjugierte Diene mit 5 bis 25 C-Atomen wie Penta-1,4-dien, Hexa-1,4-dien, Hexa-1,5-dien, 2,5-Di-methylhexa-1,5-dien und Octa-1,4-dien, cyclische Diene wie Cyclopentadien, Cyclohexadiene, Cyclooctadiene und Dicyclopentadien sowie Alkenylnorbornene wie 5-Ethyliden-2-norbornen, 5-Butyliden-2-norbornen, 2-Methallyl-5-norbornen, 2-Isopropenyl-5-norbornen und Tricyclodiene wie 3-Methyl-tricyclo(5.2.1.0.2.6)-3,8-decadien oder deren Mischungen genannt. Bevorzugt werden Hexa-1,5-dien, 5-Ethyliden-Norbornen und Dicyclopentadien. Der Diengehalt der EPDM-Kautschuke beträgt vorzugsweise 0,5 bis 50, insbesondere 2 bis 20 und besonders bevorzugt 3 bis 15 Gew.-%, bezogen auf das Gesamtgewicht des Olefinpolymerisats.

Die EPM- bzw. EPDM-Kautschuke sind vorzugsweise mit reaktiven Carbonsäuren oder deren Derivaten gepfropft. Hier seien vor allem Acrylsäure, Methacrylsäure und deren Derivate sowie Maleinsäureanhydrid genannt.

Eine weitere Gruppe bevorzugter Olefinpolymerisate sind Copolymere von α-Olefinen mit 2 - 8 C-Atomen, insbesondere des Ethylens, mit C₁-C₁₈-Alkylestern der Acrylsäure und/oder Methacrylsäure.

Grundsätzlich eignen sich alle primären, sekundären und tertiären C₁-C₁₈-Alkylester der Acrylsäure oder Methacrylsäure, doch werden Ester mit 1 - 12 C-Atomen, insbesondere mit 2 - 10 C-Atomen bevorzugt.

Beispiele hierfür sind Methyl-, Ethyl-, Propyl-, n-, i-Butyl- und t-Butyl-, 2-Ethylhexyl-, Octyl- und Decylacrylate bzw. die entsprechenden Ester der Methacrylsäure. Von diesen werden n-Butylacrylat und 2-Ethylhexylacrylat besonders bevorzugt.

Der Anteil der Methacrylsäureester und Acrylsäureester B₃) an den Olefinpolymerisaten beträgt 0 - 45, vorzugsweise 20 - 40 und insbesondere 30 - 40 Gew.-%.

Anstelle der Ester B₃) oder zusätzlich zu diesen können in den Olefinpolymerisaten auch säurefunktionelle und/oder latent säurefunktionelle Monomere ethylenisch ungesättigter Mono- oder Dicarbonsäuren B₄) oder Epoxygruppen aufweisende Monomere B₅) enthalten sein.

Als Beispiele für Monomere B₄) seien Acrylsäure, Methacrylsäure, tertiäre Alkylester dieser Säuren, insbesondere tert.-Butylacrylat und Dicarbonsäuren wie Maleinsäure und Fumarsäure oder Derivate dieser Säuren sowie deren Monoester genannt.

Als latent säurefunktionelle Monomere sollen solche Verbindungen verstanden werden, die unter den Polymerisationsbedingungen bzw. bei der Einarbeitung der Olefinpolymerisate in die Formmassen freie Säuregruppen bilden. Als Beispiele hierfür seien Anhydride von Dicarbonsäuren mit bis zu 20 C-Atomen, insbesondere Maleinsäureanhydrid und tertiäre C₁-C₁₂-Alkylester der vorstehend genannten Säuren, insbesondere tert.-Butylacrylat und tert.-Butylmethacrylat angeführt.

Die säurefunktionellen bzw. latent säurefunktionellen Monomeren und die Epoxygruppen-enthaltenden Monomeren werden vorzugsweise durch Zugabe von Verbindungen der allgemeinen Formeln I - IV zum Monomerengemisch in die Olefinpolymerisate eingebaut.

R₁C(COOR₂)=C(COOR₃)R₄ (I)

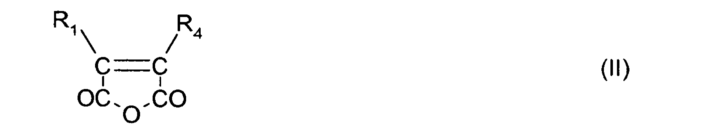

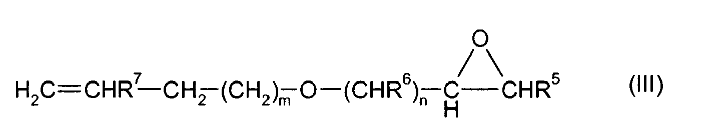

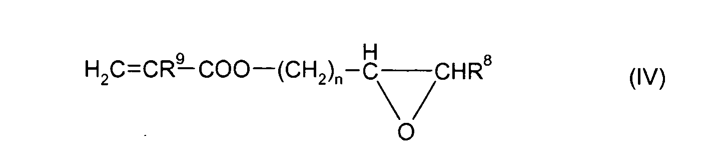

wobei die Reste R¹ - R⁹ Wasserstoff oder Alkylgruppen mit 1 bis 6 C-Atomen darstellen und m eine ganze Zahl von 0 bis 20 und n eine ganze Zahl von 0 bis 10 ist.

Bevorzugt für R¹ - R⁷ ist Wasserstoff, für m der Wert 0 oder 1 und für n der Wert 1. Die entsprechenden Verbindungen sind Maleinsäure, Fumarsäure, Maleinsäureanhydrid, B₄) bzw. Alkenylglycidylether oder Vinylglycidylether B₅).

Bevorzugte Verbindungen der Formeln I, II, III und IV sind Maleinsäure und Maleinsäureanhydrid als Komponente B₄) und Epoxygruppen-enthaltende Ester der Acrylsäure und/oder Methacrylsäure, wobei Glycidylacrylat und Glycidylmethacrylat (als Komponente B₅) besonders bevorzugt werden.

Der Anteil der Komponenten B₄) bzw. B₅) beträgt jeweils 0 bis 40 Gew.-%, insbesondere 0,1 bis 20 und besonders bevorzugt 0,15 bis 15 Gew.-%, bezogen auf das Gesamtgewicht der Olefinpolymerisate.

Besonders bevorzugt sind Olefinpolymerisate aus
- 50 bis 98,9: insbesondere 55 bis 65 Gew.-% Ethylen,
- 0,1 bis 20,: insbesondere 0,15 bis 10 Gew.-% Glycidylacrylat und/oder Glycidylmethacrylat, Acrylsäure und/oder Maleinsäureanhydrid,
- 1 bis 45,: insbesondere 5 bis 40 Gew.-% n-Butylacrylat und/oder 2-Ethylhexylacrylat, sowie
- 0 bis 10,: insbesondere 0,1 bis 3 Gew.-% Maleinsäureanhydrid oder Fumarsäure oder deren Mischungen.

Weitere bevorzugte Ester der Acryl- und/oder Methacrylsäure sind die Methyl-, Ethyl-, Propyl- und i- bzw. t-Butylester.

Als sonstige Monomere B₆) kommen z.B. Vinylester und Vinylether in Betracht.

Die Herstellung der vorstehend beschriebenen Ethylencopolymeren kann nach an sich bekannten Verfahren erfolgen, vorzugsweise durch statistische Copolymerisation unter hohem Druck und erhöhter Temperatur.

Der Schmelzindex der Ethylencopolymeren liegt im allgemeinen im Bereich von 1 bis 80 g/10 min (gemessen bei 190°C und 2,16 kg Belastung).

Als Kautschuke kommen weiterhin kommerzielle Ethylen-α-Olefin-Copolymere, welche mit Polyamid reaktionsfähige Gruppen enthalten, in Betracht. Die Herstellung der zugrunde liegenden Ethylen-α-Olefin-Copolymere erfolgt durch Übergangsmetallkatalyse in der Gasphase oder in Lösung. Als Comonomere kommen folgende α-Olefine in Frage: Propylen, 1-Buten, 1-Penten, 4-Methyl-1-penten, 1-Hexen, 1-Hepten, 1-Octen, 1-Nonen, 1-Decen, 1-Undecen, 1-Dodecen, Styrol und substituierte Styrole, Vinylester, Vinylacetate, Acrylester, Methacrylester, Glycidylacrylate und -methacrylate, Hydroxyethylacrylate, Acrylamide, Acrylnitril, Allylamin; Diene, wie z.B. Butadien Isopren.

Besonders bevorzugt als Komponente B) sind Ethylen/1-Octen-Copolymere, Ethylen/1-Buten-Copolymere, Ethylen-Propylen-Copolymere, wobei Zusammensetzungen aus
B₁₁) 25 bis 85 Gew.-%, vorzugsweise 35 bis 80 Gew.-% Ethylen,
B₁₂) 14,9 bis 72 Gew.-%, vorzugsweise 19,8 bis 63 Gew.-% 1-Octen oder 1-Buten oder Propylen oder deren Mischungen
B₄) 0,1 bis 3 Gew.-%, vorzugsweise 0,2 bis 2 Gew.-% einer ethylenisch ungesättigten Mono- oder Dicarbonsäure oder einem funktionellen Derivat einer solchen Säure.
besonders bevorzugt sind.

Das Molekulargewicht dieser Ethylen-α-Olefin-Copolymere liegt zwischen 10.000 und 500.000 g/mol, bevorzugt zwischen 15.000 und 400.000 g/mol (Mn, bestimmt mittels GPC in 1,2,4-Trichlorbenzol mit PS-Eichung).

Der Anteil an Ethylen in den Ethylen-α-Olefin-Copolymere liegt zwischen 5 und 97, bevorzugt zwischen 10 und 95, insbesondere zwischen 15 und 93 Gew.-%.

In einer besonderen Ausführungsform werden mittels sog. "single site catalysts" hergestellte Ethylen-α-Olefin-Copolymere eingesetzt. Weitere Einzelheiten können der US 5,272,236 entnommen werden. In diesem Fall weisen die Ethylen-α-Olefin-Copolymere eine für Polyolefine enge Molekulargewichtsverteilung kleiner 4, vorzugsweise kleiner 3,5 auf.

Als Ausgangsmaterial für funktionalisierte Kautschuke können auch hydrierte bzw. partiell hydrierte Styrol/Dien-Blockcopolymere verwendet werden.

Der Hydrierungsgrad beträgt von 50 bis 95 %, vorzugsweise von 60 bis 100 % (bestimmbar mittels ¹H-NMR)

Bevorzugte Schlagzähmodifier B sind Blockpolymere aus Vinylaromaten und Dienen. Schlagzähmodifier dieses Typs sind bekannt. In der DE-AS 1 932 234, der DE-AS 2 000 118 sowie der DE-OS 2 255 930 sind unterschiedlich aufgebaute vinylaromatische und Dienblöcke umfassende elastomere Blockcopolymerisate beschrieben. Die Verwendung entsprechender hydrierter Blockcopolymerisate gegebenenfalls im Gemisch mit der nicht hydrierten Vorstufe als Schlagzähmodifier ist beispielsweise beschrieben in der DE-OS 2 750 515, DE-OS 2 434 848, DE-OS 3 038 551, EP-A-0 080 666 und WO 83/01254. Auf die Offenbarung obiger Druckschriften wird hiermit ausdrücklich Bezug genommen.

Insbesondere sind erfindungsgemäß brauchbar Vinylaromat-Dien-Blockcopolymerisate aus Blöcken, die eine Hartphase (Blocktyp S) und als Weichphase einen Block B/S aus Dien- und Vinylaromaten-Einheiten enthalten, der statistischen Aufbau besitzt. Der Aufbau kann dabei entlang der Kette im statistischen Mittel homogen oder inhomogen sein.

Man erhält ein solches erfindungsgemäß geeignetes kautschukelastisches Blockcopolymerisat dadurch, dass die Weichphase aus einen statistischen Copolymerisat eines Vinylaromaten mit einem Dien gebildet wird; statistische Copolymerisate von Vinylaromaten und Dienen erhält man durch Polymerisation in Gegenwart eines polaren Cosolvens.

Ein erfindungsgemäß verwendbares Blockcopolymerisat kann z.B. durch eine der folgenden allgemeinen Formeln (1) bis (11) dargestellt werden:
(1) (S-B/S)ₙ;
(2) (S-B/S)ₙ-S;
(3) B/S-(S-B/S)ₙ;
(4) X-[(S-B/S)ₙ]ₘ⁺¹
(5) X-[(B/S-S)ₙ]ₘ⁺¹;
(6) X-[(S-B/S)ₙ-S]ₘ⁺¹;
(7) X-[(B/S-S)ₙ-B/S]ₘ⁺¹;
(8) Y-[(S-B/S)ₙ]ₘ⁺¹;
(9) Y-[(B/S-S)ₙ]ₘ⁺¹;
(10) Y-[(S-B/S)ₙ-S]ₘ⁺¹;
(11) Y-[(B/S-S)ₙ-B/S]ₘ⁺¹;
wobei
- S: für einen vinylaromatischen Block,
- B/S: für die Weichphase aus einem statistisch aus Dien- und vinylaromatischen Einheiten aufgebauten Block steht,
- X: den Rest eines n-funktionellen Initiators,
- Y: den Rest eines m-funktionellen Kopplungsmittels und
- m,n: natürliche Zahlen von 1 bis 10 bedeuten.

Bevorzugt ist ein Blockcopolymerisat einer der allgemeinen Formeln S-B/S-S, X-[-B/S-S]₂ und Y-[-B/S-S]₂ (Bedeutung der Abkürzungen wie vorstehend) und besonders bevorzugt ein Blockcopolymerisat, dessen Weichphase unterteilt ist in Blöcke
(12) (B/S)₁-(B/S)₂;
(13) (B/S)₁-(B/S)₂-(B/S)₁;
(14) (B/S)₁-(B/S)₂-(B/S)₃;
wobei die Indices 1, 2, 3 für unterschiedliche Strukturen in dem Sinne stehen, dass das Vinylaromat/Dien-Verhältnis in den einzelnen Blöcken B/S unterschiedlich ist oder sich innerhalb eines Blocks in den Grenzen (B/S)₁(B/S)₂ kontinuierlich ändert, wobei die Glasübergangstemperatur T_{g} jedes Teilblocks unter 25°C liegt.

Ein Blockcopolymerisat, das mehrere Blöcke B/S und/oder S mit unterschiedlicher Molmasse je Molekül aufweist, ist ebenfalls bevorzugt.

Ebenso kann an die Stelle eines ausschließlich aus vinylaromatischen Einheiten aufgebauten Blocks S ein Block B treten, da es insgesamt lediglich darauf ankommt, dass ein kautschukelastisches Blockcopolymerisat gebildet wird. Solche Copolymerisate können z.B. eine der Strukturen (15) bis (18) haben
(15) B-(B/S)
(16) (B/S)-B-(B/S)
(17) (B/S)₁-B-(B/S)₂
(18) B-(B/S)₁-(B/S)₂.

Bevorzugte Vinylaromaten sind Styrol, o-Methylstyrol, Vinyltoluol oder Mischungen dieser Verbindungen. Bevorzugte Diene sind Butadien, Isopren, Piperylen, 1-Phenylbutadien oder Mischungen dieser Verbindungen. Eine besonders bevorzugte Monomerkombination ist Butadien und Styrol.

Besonders bevorzugt sind die Weichblöcke aus etwa 25 bis 75 Gew.-% Styrol und etwa 25 bis 75 Gew.-% Butadien aufgebaut. Insbesondere bevorzugt sind Weichblöcke, die einen Butadienanteil von etwa 34 bis 69 Gew.-% und einen Styrolanteil etwa von 31 bis 66 Gew.-% enthalten.

Der Gewichtsanteil des Diens im gesamten Blockcopolymer liegt im Falle der Monomerkombination Styrol/Butadien bei 15 bis 65 Gew.-%, derjenige der vinylaromatischen Komponente entsprechend bei 85 bis 35 Gew.-%. Besonders bevorzugt sind ButadienStyrol-Blockcopolymere mit einer Monomerzusammensetzung aus 25 bis 60 Gew.-% Dien und 75 bis 40 Gew.-% an vinylaromatischer Verbindung.

Die Blockcopolymere sind durch anionische Polymerisation in einem unpolaren Lösungsmittel unter Zusatz eines polaren Cosolvens erhältlich. Es besteht dabei die Vorstellung, dass das Cosolvens gegenüber dem Metallkation als Lewis-Base wirkt. Als Lösungsmittel werden bevorzugt aliphatische Kohlenwasserstoffe, wie Cyclohexan oder Methylcyclohexan, verwendet. Als Lewis-Basen werden polare aprotische Verbindungen, wie Ether und tertiäre Amine, bevorzugt. Beispiele für besonders effektive Ether sind Tetrahydrofuran und aliphatische Polyether wie Diethylenglycoldimethylether. Als tertiäre Amine sind Tributylamin und Pyridin zu nennen. Das polare Cosolvens wird dem unpolaren Lösungsmittel in einer geringen Menge, z.B. von 0,5 bis 5 Vol.-%, zugesetzt. Besonders bevorzugt ist Tetrahydrofuran in einer Menge von 0,1 bis 0,3 Vol.-%. Erfahrungsgemäß kommt man mit einer Menge von etwa 0,2 Vol.-% in den meisten Fällen aus.

Durch die Dosierung und Struktur der Lewis-Base werden die Copolymerisationsparameter und der Anteil an 1,2- bzw. 1,4-Verknüpfungen der Dieneinheiten bestimmt. Die erfindungsgemäßen Polymere haben z.B. einen Anteil von 15 bis 40% an 1,2-Verknüpfungen und 85 bis 60% an 1,4-Verknüpfungen bezogen auf alle Dieneinheiten.

Die anionische Polymerisation wird mittels metallorganischer Verbindungen initiiert. Bevorzugt sind Verbindungen der Alkalimetalle, besonders des Lithiums. Beispiele für Initiatoren sind Methyllithium, Ethyllithium, Propyllithium, n-Butyllithium, sek.- Butyllithium und tert.-Butyllithium. Die metallorganische Verbindung wird als Lösung in einem chemisch indifferenten (inerten) Kohlenwasserstoff zugesetzt. Die Dosierung richtet sich nach dem angestrebten Molekulargewicht des Polymers, liegt aber in der Regel im Bereich von 0,002 bis 5 mol-%, wenn man sie auf die Monomeren bezieht.

Die Polymerisationstemperatur kann etwa 0 bis 130°C betragen. Bevorzugt wird der Temperaturbereich von 30 bis 100°C.

Für die mechanischen Eigenschaften ist der Volumenanteil der Weichphase im Festkörper von entscheidender Bedeutung. Erfindungsgemäß liegt der Volumenanteil der aus Dien- und vinylaromatischen Sequenzen aufgebauten Weichphase bei 60 bis 95, bevorzugt bei 70 bis 90 und besonders bevorzugt bei 80 bis 90 Vol.-%. Die aus den vinylaromatischen Monomeren entstandenen Blöcke A bilden die Hartphase, deren Volumenanteil entsprechend 1 bis 40, bevorzugt 10 bis 30 und besonders bevorzugt 10 bis 20 Vol.-% ausmacht.

Es ist darauf hinzuweisen, dass zwischen den oben erwähnten Mengenverhältnissen von vinylaromatischer Verbindung und Dien, den vorstehend angegebenen Grenzwerten der Phasenvolumina und der Zusammensetzung, die sich aus den erfindungsgemäßen Bereichen der Glastemperatur ergibt, keine strenge Übereinstimmung besteht, da es sich um jeweils auf volle Zehnerstellen gerundete Zahlenwerte handelt. Dies könnte vielmehr nur zufällig der Fall sein.

Messbar ist der Volumenanteil der beiden Phasen mittels kontrastierter Elektronenmikroskopie oder Festkörper-NMR-Spektroskopie. Der Anteil der vinylaromatischen Blöcke lässt sich nach Osmiumabbau des Polydienanteils durch Fällen und Auswiegen bestimmen. Das künftige Phasenverhältnis eines Polymers lässt sich auch aus den eingesetzten Monomermengen berechnen, wenn man jedes mal vollständig auspolymerisieren lässt.

Im Sinne der Erfindung eindeutig definiert wird das Blockcopolymere durch den Quotienten aus dem Volumenanteil in Prozent der aus den B/S-Blöcken gebildeten Weichphase und dem Anteil an Dieneinheiten in der Weichphase, der für die Kombination Styrol/Butadien zwischen 25 und 70 Gew.-% liegt.

Durch den statischen Einbau der vinylaromatischen Verbindungen in den Weichblock des Blockcopolymeren und die Verwendung von Lewis-Basen während der Polymerisation wird die Glasübergangstemperatur (T_{g}) beeinflusst. Die Glasübergangstemperatur des gesamten Copolymers beträgt vorzugsweise -50°C bis +25°C, bevorzugt weniger als 0°C.

Das Molekulargewicht des Blocks S beträgt vorzugsweise 1000 bis 200.000, insbesondere 3.000 und 80.000 [g/mol]. Innerhalb eines Moleküls können S-Blöcke unterschiedliche Molmasse haben.

Das Molekulargewicht des Blocks B/S beträgt üblicherweise von 2.000 bis 250.000 [g/mol]; bevorzugt sind Werte von 5.000 bis 150.000 [g/mol].

Auch Block B/S kann wie Block S innerhalb eines Moleküls unterschiedliche Molekulargewichtswerte einnehmen.

Das Kupplungszentrum X wird durch die Umsetzung der lebenden anionischen Kettenenden mit einem mindestens bifunktionellen Kupplungsagens gebildet. Beispiele für derartige Verbindungen sind in den US-PSen 3 985 830, 3 280 084, 3 637 554 und 4 091 053 zu finden. Bevorzugt werden z.B. epoxidierte Glyceride wie epoxidiertes Leinsamenöl oder Sojaöl eingesetzt; geeignet ist auch Divinylbenzol. Speziell für die Dimerisierung sind Dichlordialkylsilane, Dialdehyde, wie Terephthalaldehyd, und Ester, wie Ethylformiat oder -benzoat, geeignet.

Bevorzugte Polymerstrukturen sind S-B/S-S, X-[-B/S-S]₂ und Y-[-B/S-S]₂, wobei der statistische Block B/S selbst wieder in Blöcke B1/S1-B2/S2-B3/S3-... unterteilt sein kann. Bevorzugt besteht der statistische Block aus 2 bis 15 statistischen Teilblöcken, besonders bevorzugt aus 3 bis 10 Teilblöcken. Die Aufteilung des statistischen Blocks B/S in möglichst viele Teilblöcke Bn/Sn bietet den entscheidenden Vorteil, dass auch bei einem Zusammensetzungsgradienten innerhalb eines Teilblocks Bn/Sn, wie er sich in der anionischen Polymerisation unter praktischen Bedingungen nur schwer vermeiden lässt, sich der B/S-Block insgesamt wie ein nahezu perfektes statistisches Polymer verhält. Es bietet sich deshalb an, weniger als die theoretische Menge an Lewis-Base zuzusetzen, was den Anteil 1,4-Dienverknüpfungen erhöht, die Glastemperatur T_{g} absenkt und die Vernetzungsanfälligkeit des Polymeren mindert. Ein größerer oder ein kleinerer Anteil der Teilblöcke kann mit einem hohen Dienanteil ausgestattet werden.

Dies bewirkt, dass das Polymer auch unterhalb der Glastemperatur der überwiegenden B/S-Blöcke eine Restzähigkeit behält und nicht vollständig versprödet.

Alle oben angegebenen Gewichts- und Volumenangaben beziehen sich auf die Monomerkombination Butadien/Styrol. Diese Angaben können jedoch ohne weiteres auf andere zu Styrol und Butadien technisch äquivalente Monomere umgerechnet werden.

Die Blockcopolymeren können dadurch aufgearbeitet werden, dass die Carbanionen mit einem Alkohol, wie Isopropanol, protoniert werden, die Reaktionsmischung angesäuert wird, z.B. mit einem Gemisch aus CO₂ und Wasser und das Lösungsmittel entfernt wird. Die Blockcopolymeren können Oxidationsinhibitoren und Antiblockmittel enthalten.

Auch Mischungen obiger Schlagzähmodifier sind einsetzbar.

Basierend auf diesen Ausgangsmaterialien werden die funktionalisierten Produkte vorzugsweise durch Pfropfung mit funktionellen Monomeren erhalten. Bevorzugt werden Acrylsäure, Fumarsäure, Zitronensäure oder Maleinsäureanhydrid eingesetzt. Die Pfropfung kann in Lösung oder in der Schmelze durchgeführt werden. Bevorzugt wird die Modifizierung in der Schmelze unter Einwirkung von Initiatoren (Peroxide, AzoVerbindungen, C-Radikal-Generatoren) durchgeführt.

Bevorzugt eingesetzte Handelsprodukte B sind Exxelor® VA 1801 oder 1803, Kraton® G 1901 FX oder Fusabond® N NM493 D der Firmen Exxon, Kraton und DuPont.

Selbstverständlich können auch Mischungen der vorstehend aufgeführten Kautschuktypen eingesetzt werden.

Als faser- oder teilchenförmige Füllstoffe C) seien Kohlenstofffasern, Glasfasern, Glaskugeln, amorphe Kieselsäure, Calciumsilicat, Calciummetasilicat, Magnesiumcarbonat, Kaolin, Kreide, gepulverter Quarz, Glimmer, Bariumsulfat und Feldspat genannt, die in Mengen von 1 bis 50 Gew.-%, insbesondere von 2 bis 40, vorzugsweise von 3 bis 30 Gew.-% eingesetzt werden.

Als bevorzugte faserförmige Füllstoffe seien Kohlenstofffasern, Aramid-Fasern und Kaliumtitanat-Fasern genannt, wobei Glasfasern als E-Glas besonders bevorzugt sind. Diese können als Rovings oder Schnittglas in den handelsüblichen Formen eingesetzt werden.

Die faserförmigen Füllstoffe können zur besseren Verträglichkeit mit dem Thermoplasten mit einer Silanverbindung oberflächlich vorbehandelt sein.

Geeignete Silanverbindungen sind solche der allgemeinen Formel

(X-(CH₂)ₙ)ₖ-Si-(O-CₘH₂ₘ₊₁)₄₋ₖ

in der die Substituenten folgende Bedeutung haben:
- X: NH₂-, 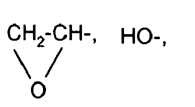
- n: eine ganze Zahl von 2 bis 10, bevorzugt 3 bis 4
- m: eine ganze Zahl von 1 bis 5, bevorzugt 1 bis 2
- k: eine ganze Zahl von 1 bis 3, bevorzugt 1

Bevorzugte Silanverbindungen sind Aminopropyltrimethoxysilan, Aminobutyltrimethoxysilan, Aminopropyltriethoxysilan, Aminobutyltriethoxysilan sowie die entsprechenden Silane, welche als Substituent X eine Glycidylgruppe enthalten.

Die Silanverbindungen werden im allgemeinen in Mengen von 0,01 bis 2, vorzugsweise 0,025 bis 1,0 und insbesondere 0,05 bis 0,5 Gew.-% (bezogen auf C) zur Oberflächenbeschichtung eingesetzt.

Geeignet sind auch nadelförmige mineralische Füllstoffe.

Unter nadelförmigen mineralischen Füllstoffen wird im Sinne der Erfindung ein mineralischer Füllstoff mit stark ausgeprägtem nadelförmigen Charakter verstanden. Als Beispiel sei nadelförmiger Wollastonit genannt. Vorzugsweise weist das Mineral ein UD-(Länge Durchmesser)-Verhältnis von 8 : 1 bis 35 : 1, bevorzugt von 8 : 1 bis 11 : 1 auf. Der mineralische Füllstoff kann gegebenenfalls mit den vorstehend genannten Silanverbindungen vorbehandelt sein; die Vorbehandlung ist jedoch nicht unbedingt erforderlich.

Als weitere Füllstoffe seien Kaolin, calciniertes Kaolin, Wollastonit, Talkum und Kreide genannt sowie zusätzlich plättchen- oder nadelförmige Nanofüllstoffe bevorzugt in Mengen zwischen 0,1 und 10 % . Bevorzugt werden hierfür Böhmit, Bentonit, Montmorillonit, Vermicullit, Hektorit und Laponit eingesetzt. Um eine gute Verträglichkeit der plättchenförmigen Nanofüllstoffe mit dem organischen Bindemittel zu erhalten, werden die plättchenförmigen Nanofüllstoffe nach dem Stand der Technik organisch modifiziert. Der Zusatz der plättchen- oder nadelförmigen Nanofüllstoffe zu den erfindungsgemäßen Nanokompositen führt zu einer weiteren Steigerung der mechanischen Festigkeit.

Als Komponente C) enthalten die erfindungsgemäßen Formmassen vorzugsweise Talkum, welches ein hydratisiertes Magnesiumsilikat der Zusammensetzung Mg₃[(OH)₂/Si₄O₁₀] oder 3 MgO · 4 SiO₂ · H₂O ist. Diese sogenannten Drei-Schicht-Phyllosilikate weisen einen triklinen, monoklinen oder rhombischen Kristallaufbau auf mit blättchenförmigem Erscheinungsbild. An weiteren Spurenelementen können Mn, Ti, Cr, Ni, Na und K anwesend sein, wobei die OH-Gruppe teilweise durch Fluorid ersetzt sein kann.

Besonders bevorzugt wird Talkum eingesetzt, dessen Teilchengrößen zu 99,5 % < 20 µm beträgt. Die Teilchengrößenverteilung wird üblicherweise durch Sedimentationsanalyse DIN 6616-1 bestimmt und beträgt vorzugsweise:
< 20 µm 99,5 Gew.-%
< 10 µm 99 Gew.-%
< 5 µm 85 Gew.-%
< 3 µm 60 Gew.-%
< 2 µm 43 Gew.-%

Derartige Produkte sind im Handel als Micro-Talc I.T. extra (Omya) erhältlich.

Als Komponente D) enthalten die erfindungsgemäßen Formmassen 0,2 bis 5, vorzugsweise 0,25 bis 4 und insbesondere 0,3 bis 3 Gew.-% mindestens eines Schmiermittels. Bevorzugt sind Ester oder Amide gesättigter oder ungesättigter aliphatischer Carbonsäuren mit 10 bis 40, bevorzugt 16 bis 22 C-Atomen mit aliphatischen gesättigten Alkoholen oder Aminen mit 2 bis 40, vorzugsweise 2 bis 6 C-Atomen enthalten.

Die Carbonsäuren können 1- oder 2-wertig sein. Als Beispiele seien Pelargonsäure, Palmitinsäure, Laurinsäure, Margarinsäure, Dodecandisäure, Behensäure und besonders bevorzugt Stearinsäure, Caprinsäure sowie Montansäure (Mischung von Fettsäuren mit 30 bis 40 C-Atomen) genannt.

Die aliphatischen Alkohole können 1- bis 4-wertig sein. Beispiele für Alkohole sind n-Butanol, n-Octanol, Stearylalkohol, Ethylenglykol, Propylenglykol, Neopentylglykol, Pentaerythrit, wobei Glycerin und Pentaerythrit bevorzugt sind.

Die aliphatischen Amine können 1- bis 3-wertig sein. Beispiele hierfür sind Stearylamin, Ethylendiamin, Propylendiamin, Hexamethylendiamin, Di(6-Aminohexyl)amin, wobei Ethylendiamin und Hexamethylendiamin besonders bevorzugt sind. Bevorzugte Ester oder Amide sind entsprechend Glycerindistearat, Glycerintristearat, Ethylendiamindistearat, Glycerinmonopalmitat, Glycerintrilaurat, Glycerinmonobehenat und Pentaerythrittetrastearat.

Es können auch Mischungen verschiedener Ester oder Amide oder Ester mit Amiden in Kombination eingesetzt werden, wobei das Mischungsverhältnis beliebig ist.

Erfindungsgemäß wird als Komponente E) mindestens ein elektrisch leitfähiges Additiv verwendet. Vorzugsweise wird nur ein elektrisch leitfähiges Additiv eingesetzt, gegebenenfalls können jedoch auch zwei oder mehrere elektrisch leitfähige Additive eingesetzt werden. Als elektrisch leitfähige Additive eignen sich beispielsweise Carbon-Nanotubes, Graphit oder Leitruß. Vorzugsweise werden als Komponente E) in den erfindungsgemäßen Formmassen Carbon-Nanotubes eingesetzt.

Im Rahmen der vorliegenden Erfindung versteht man unter Carbon-Nanotubes kohlenstoffhaltige Makromoleküle, in denen der Kohlenstoff (hauptsächlich) Graphitstruktur aufweist und die einzelnen Graphitschichten schlauchförmig angeordnet sind. Nanotubes sowie deren Synthese sind in der Literatur bereits bekannt (beispielsweise J. Hu et al., Acc. Chem. Res. 32 (1999), 435 - 445). Im Rahmen der vorliegenden Erfindung kann grundsätzlich jegliche Art von Nanotubes eingesetzt werden.

Vorzugsweise beträgt der Durchmesser der einzelnen schlauchförmigen Graphitschichten (Graphitschläuche) 4 bis 12 nm, insbesondere 5 bis 10 nm. Nanotubes lassen sich prinzipiell in sogenannte single walled nanotubes (SWNTs; "einwändige" Nanotubes) und multiwalled nanotubes (MWNTs; "mehrwändige" Nanotubes) unterscheiden. In den MWNTs sind somit mehrere Graphitschläuche übereinandergestülpt.

Ferner kann die äußere Form der Schläuche variieren, diese kann gleichförmigen Durchmesser innen und außen aufweisen, es sind aber auch knotenförmige Schläuche und wurmähnliche Strukturen (vermicular) herstellbar.

Das Aspektverhältnis (Länge des jeweiligen Graphitschlauches zu dessen Durchmesser) beträgt mindestens > 10, vorzugsweise > 5. Die Nanotubes haben eine Länge von mindestens 10 nm. Im Rahmen der vorliegenden Erfindung werden als Komponente E) MWNTs bevorzugt. Insbesondere weisen die MWNTs ein Aspektverhältnis von ca. 1000 : 1 sowie eine Durchschnittslänge von ungefähr 10 000 nm auf.

Die spezifische Oberfläche gemäß BET beträgt in der Regel 50 bis 2000 m²/g, vorzugsweise von 200 bis 1200 m²/g. Die bei der katalytischen Herstellung entstehenden Unreinheiten (z.B. Metalloxide) betragen in der Regel gemäß HRTEM von 0,1 bis 12 %, vorzugsweise von 0,2 bis 10 %.

Geeignete Nanotubes können unter der Bezeichnung "multiwall" von der Firma Hyperion Catalysis Int., Cambridge MA (USA) bezogen werden (siehe auch EP 205 556, EP 969 128, EP 270 666, US 6,844,061).

Als Leitruß kann jede gängige Form von Ruß eingesetzt werden, geeignet sind beispielsweise das Handelsprodukt Ketjenblack 300 der Firma Akzo.

Zur Leitfähigkeitsmodifizierung kann auch Leitruß eingesetzt werden. Bedingt durch graphitartige Schichten, die in amorphem Kohlenstoff eingebettet sind, leitet Ruß Elektronen (F. Camona, Ann. Chim. Fr. 13, 395 (1988)). Die Stromleitung erfolgt innerhalb der Aggregate aus Rußpartikeln und zwischen den Aggregaten, wenn die Abstände zwischen den Aggregaten klein genug sind. Um Leitfähigkeit bei möglichst geringer Dosierung zu erzielen, werden vorzugsweise Ruße mit anisotroper Struktur verwendet (G. Wehner, Advances in Plastics Technology, APT 2005, Paper 11,Katowice 2005). Bei solchen Rußen lagern sich die Primärpartikel zu anisotropen Strukturen zusammen, so dass die zum Erreichen der Leitfähigkeit nötigen Abstände der Rußpartikel in Compounds schon bei vergleichsweise geringer Beladung erreicht wird (C. Van Bellingen, N. Probst, E. Grivei, Advances in Plastics Technology, APT 2005, Paper 13, Katowice 2005).

Geeignete Rußtypen weisen beispielsweise eine Öl-Absorption (gemessen nach ASTM D 2414-01) von mindestens 60 ml/100g, bevorzugt mehr als 90 ml/100 g auf. Die BET-Oberfläche geeigneter Produkte beträgt mehr als 50, bevorzugt mehr als 60 m²/g (gemessen nach ASTM D 3037-89). Auf der Rußoberfläche können sich verschiedene funktionelle Gruppen befinden. Die Herstellung der Leitruße kann nach verschiedenen Verfahren erfolgen (G. Wehner, Advances in Plastics Technology, APT 2005, Paper 11, Katowice 2005).

Weiterhin kann auch Graphit als Leitfähigkeitsadditiv verwendet werden. Unter Graphit versteht man eine Modifikation des Kohlenstoffs wie sie beispielsweise in A. F. Hollemann, E. Wieberg, N. Wieberg, "Lehrbuch der anorganischen Chemie,", 91.-100. Aufl., S 701-702 beschrieben ist. Graphit besteht aus planaren Kohlenstoffschichten, die übereinander angeordnet sind. Graphit kann durch mahlen zerkleinert werden. Die Partikelgröße liegt im Bereich von 0,01 µm bis 1 mm, bevorzugt im Bereich 1 bis 250 µm

Der Anteil der Komponente E) an den erfindungsgemäßen Formmassen beträgt 0,5 bis 15 Gew.-%, vorzugsweise 1 bis 14 Gew.-%, besonders bevorzugt 1,5 bis 13 Gew.-%, bezogen auf das Gesamtgewicht der Formmasse.

Als Komponente F) können die erfindungsgemäßen thermoplastischen Formmassen in Mengen bis zu 30, vorzugsweise bis zu 25 Gew.-% weitere Zusatzstoffe wie Stabilisatoren, Oxidationsverzögerer, Mittel gegen Wärmezersetzung und Zersetzung durch ultraviolettes Licht, Gleit- und Entformungsmittel, Färbemittel wie Farbstoffe und Pigmente, Keimbildungsmittel, Weichmacher usw. enthalten.

Als Beispiele für Oxidationsverzögerer und Wärmestabilisatoren sind sterisch gehinderte Phenole und/oder Phosphite, Hydrochinone, aromatische sekundäre Amine wie Diphenylamine, verschiedene substituierte Vertreter dieser Gruppen und deren Mischungen in Konzentrationen bis zu 1 Gew.-%, bezogen auf das Gewicht der thermoplastischen Formmassen genannt.

Als UV-Stabilisatoren, die im allgemeinen in Mengen bis zu 2 Gew.-%, bezogen auf die Formmasse, verwendet werden, seien verschiedene substituierte Resorcine, Salicylate, Benzotriazole und Benzophenone genannt.

Es können anorganische Pigmente, wie Titandioxid, Ultramarinblau, Eisenoxid und Ruß, weiterhin organische Pigmente, wie Phthalocyanine, Chinacridone, Perylene sowie Farbstoffe, wie Nigrosin und Anthrachinone als Farbmittel zugesetzt werden.

Als Keimbildungsmittel können Natriumphenylphosphinat, Aluminiumoxid, Siliziumdioxid sowie bevorzugt Talkum eingesetzt werden.

Bevorzugte Stabilisatoren sind aromatische sekundäre Amine in Mengen bis zu 2, vorzugsweise 0,5 bis 1,5 und insbesondere 0,7 bis 1 Gew.-%, gemäß der allgemeinen Formel I: 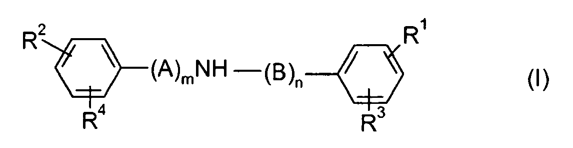 wobei
- m,n =: 0 oder 1 ,
- A und B =: durch C₁-C₄-Alkyl oder Phenyl substituiertes tertiäres C-Atom,
- R¹, R² =: Wasserstoff oder eine C₁-C₆-Alkylgruppe in ortho- oder para-Stellung, welcher gegebenenfalls substituiert sein kann durch 1 bis 3 Phenylreste, Halogen, Carboxylgruppe oder ein Übergangsmetallsalz dieser Carboxylgruppe, und
- R³, R⁴ =: Wasserstoff oder ein Methylrest in ortho- oder para-Position, wenn m plus n für 1 steht oder eine tertiäre C₃-C₉-Alkylgruppe in ortho- oder Para-Position, welche gegebenenfalls durch 1 bis 3 Phenylreste substituiert sein kann, wenn m plus n für 0 oder 1 steht,
bedeuten.

Bevorzugte Reste A oder B sind symmetrisch substituierte tertiäre Kohlenstoffatome, wobei dimethylsubstituierter tertiärer Kohlenstoff besonders bevorzugt ist. Ebenso bevorzugt sind tertiäre Kohlenstoffe, welche 1 bis 3 Phenylgruppen als Substituenten aufweisen.

Bevorzugte Reste R¹ oder R² sind para t-butyl oder tetramethylsubstituiertes n-Butyl, wobei die Methylgruppen vorzugsweise durch 1 bis 3 Phenylgruppen ersetzt sein können. Bevorzugte Holagene sind Chlor und Brom. Übergangsmetalle sind beispielsweise - welche mit R¹ oder R² = Carboxyl Übergangsmetallsalze bilden können.

Bevorzugte Reste R³ oder R⁴ sind für m plus n = 2 Wasserstoff, sowie für m plus n = 0 oder 1 ein t-Butylrest in ortho- oder para-Position, welcher insbesondere durch 1 bis 3 Phenylreste substituiert sein kann.

Beispiele für sekundäre aromatische Amine D) sind
4,4'-Bis(α,α'- tertiäroctyl)diphenylamin
4,4'Bis(α,α-dimethylbenzyl)diphenylamin
4,4'-Bis(α-methylbenzhydryl)diphenylamin
4-(1,1,3,3-Tetramethylbutyl)4'-triphenylmethyldiphenylamin
4,4'-Bis(α,α-p-trimethylbenzyl)diphenylamin
2,4,4'-Tris(α,α-dimethylbenzyl)diphenylamin
2,2'-Dibromo,4,4'- bis(α,α-dimethyl benzy1)diphenylamin
4,4'-Bis(α,α-dimethylbenzyl)-2-carboxydiphenylamini-nickel-4,4'-bis(α,α-dimethylbenzyl)-diphenylamin
2-sec-Butyl-4,4'-bis(α,α-dimethylbenzyl)diphenylamin
4,4'-Bis(α,α-dimethylbenzyl)-2-(α-methlheptyl)diphenylamin
2-(α-Methylpentyl)4,4'-ditrityldiphenylamin
4-α,α-Dimethylbenzyl-4'-isopropoxydiphenylamin
2-(α-Methylheptyl)-4'-(α,α-dimethylbenzyl)diphenylamin
2-(α-Methylpentyl)-4'- trityldiphenylamin
4,4'-Bis(tertiary-butyl)diphenylamin sowie:

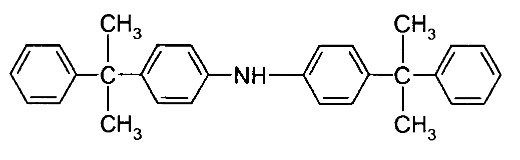

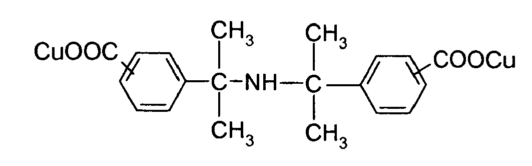

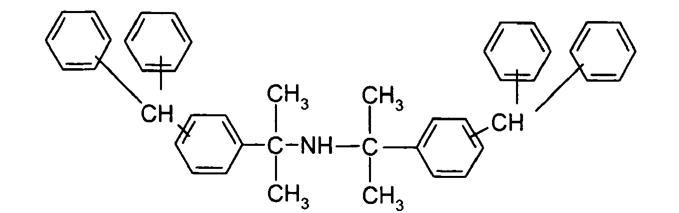

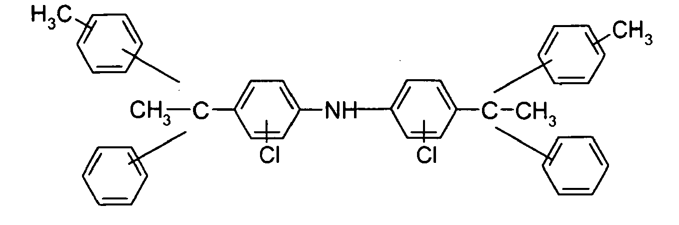

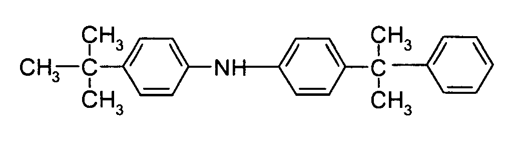

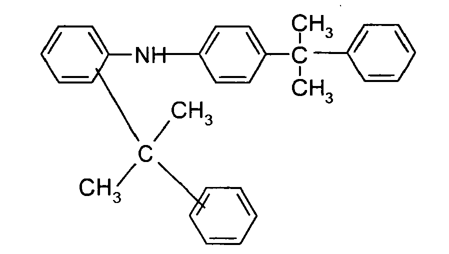

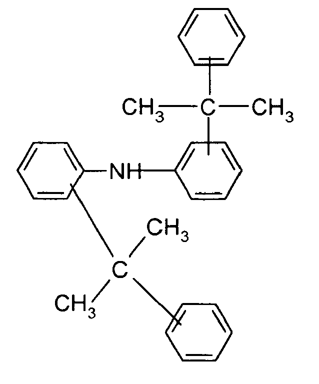

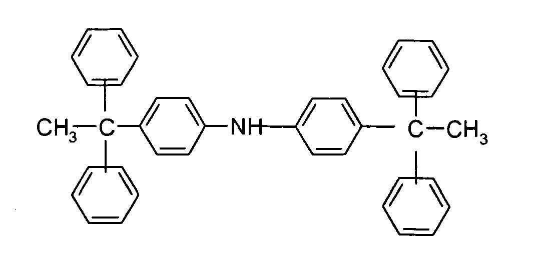

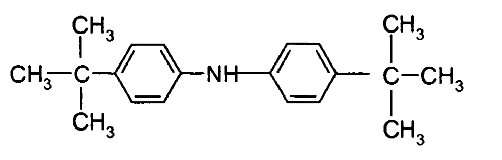

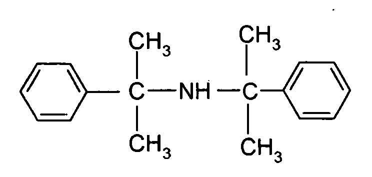

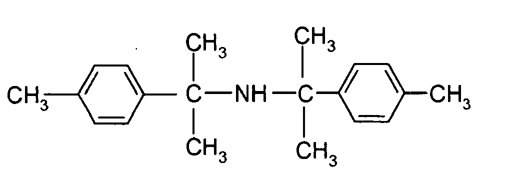

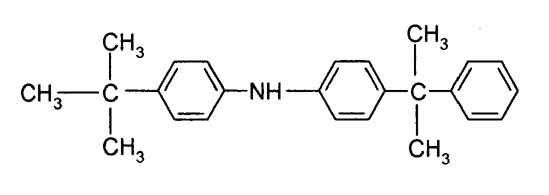

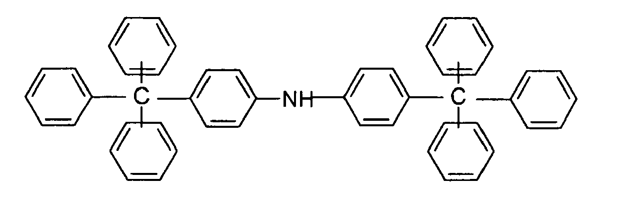

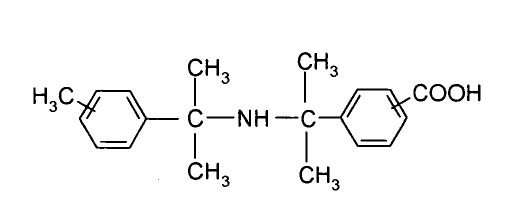

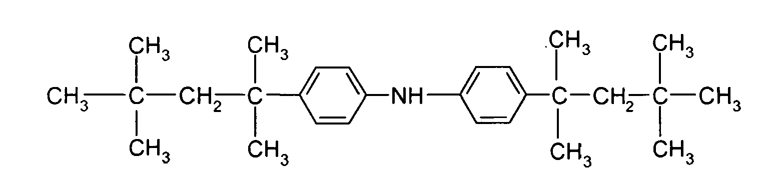

Die Herstellung erfolgt gemäß den in der BE-A 67/05 00 120 und CA-A 9 63 594 beschriebenen Verfahren. Bevorzugte sekundäre aromatische Amine sind Diphenylamin und dessen Derivate, welche als Naugard® (Firma Uniroyal) im Handel erhältlich sind.

Diese sind in Kombination mit bis zu 2000, vorzugsweise 100 bis 2000, bevorzugt 200 bis 500 und insbesondere 200 bis 400 ppm mindestens einer phosphorhaltigen anorganischen Säure oder deren Derivate bevorzugt.

Bevorzugte Säuren sind hypophosphorige Säure, phosphorige Säure oder Phosphorsäure sowie deren Salze mit Alkalimetallen, wobei Natrium und Kalium besonders bevorzugt sind. Bevorzugte Mischungen sind insbesondere hypophosphorige und phosphorige Säure bzw. deren Alkalimetallsalze im Verhältnis 3:1 bis 1:3. Unter organischen Derivaten dieser Säuren sollen vorzugsweise Esterderivate oben genannter Säuren verstanden werden.

Die erfindungsgemäßen thermoplastischen Formmassen können nach an sich bekannten Verfahren hergestellt werden, in dem man die Ausgangskomponenten in üblichen Mischvorrichtungen wie Schneckenextrudern, Brabender-Mühlen oder Banbury-Mühlen mischt und anschließend extrudiert. Nach der Extrusion kann das Extrudat abgekühlt und zerkleinert werden. Es können auch einzelne Komponenten vorgemischt werden und dann die restlichen Ausgangsstoffe einzeln und/oder ebenfalls gemischt hinzugegeben werden. Die Mischtemperaturen liegen in der Regel bei 230 bis 320°C.

Nach einer weiteren bevorzugten Arbeitsweise können die Komponenten B) bis E) sowie gegebenenfalls F) mit einem Präpolymeren gemischt, konfektioniert und granuliert werden. Das erhaltene Granulat wird in fester Phase anschließend unter Inertgas kontinuierlich oder diskontinuierlich bei einer Temperatur unterhalb des Schmelzpunktes der Komponente A) bis zur gewünschten Viskosität kondensiert.

Die erfindungsgemäßen thermoplastischen Formmassen zeichnen sich durch eine gute Zähigkeit und gute Schädigungsarbeit bei gleichzeitig guter Steifigkeit (geringer Abfall bei Feuchteaufnahme), sowie eine deutlich verbesserte Wärmeformbeständigkeit und niedrige thermische Längenausdehnung aus.

Diese eignen sich zur Herstellung von Fasern, Folien und Formkörpern jeglicher Art. Nachfolgend sind einige Beispiele genannt: Zylinderkopfhauben, Motorradabdeckungen, Ansaugrohre, Ladeluftkühlerkappen, Steckverbinder, Zahnräder, Lüfterräder, Kühlwasserkästen.

Im Auto-Innenraum ist eine Verwendung für Armaturentafeln, Lenkstockschalter, Sitzteile, Kopfstützen, Mittelkonsolen, Getriebe-Komponenten und Türmodule, im Auto-Außenraum für Türgriffe, Außenspiegelkomponenten, Scheibenwischerkomponenten, Scheibenwischerschutzgehäuse, Ziergitter, Dachreling, Schiebedachrahmen, Motorabdeckungen, Zylinderkopfhauben, Ansaugrohre, Scheibenwischer sowie Karosserieaußenteile wie Kotflügel, Türverkleidung, Heckklappen, Spoiler, Seitenteile, Dachmodule und Motorhauben.

### Beispiele

### Herstellung und Prüfung der Formmassen

Die Wärmeformbeständigkeit der Proben wurde nach ISO 306 (Vicat B) ermittelt (Belastung 50 N, Temperatursteigerung von 50 K je Stunde, an ISO-Stäben). Die Kerbschlagzähigkeit der Produkte wurde nach ISO 179 1 eA bestimmt.

Die Steifigkeit der Materialien wurde durch den im Zugversuch nach ISO 527 ermittelten E-Modul charakterisiert. Zur Beschleunigung der Feuchtigkeitsaufnahme wurden die Probekörper 14 Tage bei 70°C/70 % r.F. gelagert, anschließend wurde eine Ausgleichslagerung durchgeführt (24 h), danach wurde der Zugversuch durchgeführt.

Der spezifische Oberflächenwiderstand wurde nach IEC 60093 mit Leitsilber-Strichelektroden (Länge = 50 mm/Abstand = 5 mm) und Gegenelektrode in Normklima (23°C/50 % r.F.) gemessen. Die Proben lagerten vor den Messungen 7 Tage in Normklima (23°C/50 % r.F.).

### Komponente A1

Als Komponente A1 wurde ein teilaromatisches Copolyamid 6/6T (Verhältnis 30:70) eingesetzt mit einer VZ von 130 ml/g gemäß ISO 307.

### Komponente AV

Polyamid 6,6, z.B. Ultramid® A3 charakterisiert durch eine Viskositätszahl von 150 ml/g (gemessen in 1 gew.-%iger Schwefelsäure).

### Komponente B1

Fusabond® N NM493D der Firma DuPont, Ethylen-Octen-Copolymer mit Maleinsäureanhydrid funktionalisiert, MFR 1,6 g/10' (D1238, 190°C/2,16 kg).

### Komponente B2

Ethylen-Propylen-Kautschuk, mit 0,7 Gew.-% Maleinsäure/Maleinsäureanhydrid modifiziert, gekennzeichnet durch einen MFI-Wert von 3 g pro 10 min (gemessen bei 2,16 kg/230°C).

### Komponente C

Talk, z.B. Talkum IT-Extra der Fa. Omya. X₁₀ = 1,7 µm. X₉₀ = 10,8 µm (gemessen mittels Laserbeugung, wobei die Mineralien in einer Suspensionszelle in einem VE-Wasser/1 % CV K8-Tensidgemisch (Vertreiber: CV-Chemievertrieb, Hannover) homogenisiert wurden (Magnetrührer, 60 rpm).

### Komponente D1

Caesit® AV 40, Fa. Bärlocher: Ca-Stearat

### Komponente D2

### Pentaerythrittetrastearat

### Komponente E1

Leitruß Ensaco 250 der Fa. Timcal, charakterisiert durch eine Porosität von 170 kg/m³, bestimmt nach ASTM D1539-99.

### Komponente E2

Kompound, bestehend aus 20 Gew.-% Nanotubes der Fa. Hyperion Catalysis in Komponente A1, charakterisiert durch einen MVR von 170 ml/10', ISO 1133, bei 300 °C/21,6 kg (bestimmt nach ISO 1133).

### Komponente E2V

Kompound, bestehend aus 20 Gew.-% Nanotubes der Fa. Hyperion Catalysis in Komponente AV, charakterisiert durch einen MVR von 38 ml/10' (ISO 1133 bei 275 °C/5 kg).

Als Vergleichsprodukt wurde verwendet:
VP1: PA/PPE-Blend, z.B. Noryl^{®} GTX 974 der Fa. GEP

### Herstellung der Produkte

Die Komponenten wurden in einem Zweiwellenextruder bei einer Massetemperatur von 300 bis 320°C gemischt. Die Schmelze wurde durch ein Wasserbad geleitet und granuliert.

Die Probekörper wurden bei einer Massetemperatur von 330°C (Noryl GTX 979 und Vergleichsbeispiel auf Basis Ultramid®A3: 295°C) und einer Werkzeugtemperatur von 100°C hergestellt.

Die Ergebnisse der Prüfungen und die Zusammensetzungen der Formmassen sind in der Tabelle 1 aufgeführt.

**Tabelle 1**

| Formmasse | V1 | 2 | 3 | 4 | V5 |
|---|---|---|---|---|---|
| A1 | 74 | 67,5 | 65,5 | 67,5 | - |
| AV | - | - | - | - | 67,5 |
| B1 | 16 | 14,5 | 14,5 | - | 14,5 |
| B2 | - | - | - | 14,5 | - |
| C | 8,7 | 8,7 | 8,7 | 8,7 | 8,7 |
| D1 | 0,5 | 0,5 | 0,5 | 0,5 | 0,5 |
| D2 | - | - | - | - | - |
| E1 | - | 8 | 10 | 8 | 8 |
| E2 | - | - | - | - | - |
| F1 | 0,78 | 0,78 | 0,78 | 0,78 | 0,78 |
| F2 | 0,02 | 0,02 | 0,02 | 0,02 | 0,02 |
| Vicat B [°C] | 164 | 175 | 177 | 180 | 195 |
| MVI [ml/10'] | 32,0 | 13,0 | 6,7 | 10,2 | n.b. |
| ak, RT [kJ/m²] | 13,1 | 10,9 | 9,9 | 9,2 | 8,2 |
| E-Modul dry [MPa] | 2968 | 3227 | 3340 | 3400 | 3200 |
| E-Modul wet [MPa] | 3010 | 3340 | 3390 | 3450 | 2480 |
| spez. Oberflächenwiderstand [Ohm] | > 10¹⁵ | 2*10¹² | 3*10¹⁰ | 2*10¹² | 3*10¹³ |

**Tabelle 2**

| Formmasse | 6 | 7 | 8 | V9 | Noryl |
|---|---|---|---|---|---|
| A1 | 60 | 59,7 | 59,7 | - | |
| AV | - | - | - | 59,7 | |
| B1 | 16 | 16 | 16 | 16 | |
| B2 | - | - | - | - | |
| C | 8,7 | 8,7 | 8,7 | 8,7 | |
| D1 | 0,5 | 0,3 | - | 0,3 | |
| D2 | - | 0,5 | 0,8 | 0,5 | |
| E1 | 4 | 4 | 4 | 4 | |
| E2 | 10 | 10 | 10 | - | |
| E2V | | | | 10 | |
| F1 | 0,78 | 0,78 | 0,78 | 0,78 | |
| F2 | 0,02 | 0,02 | 0,02 | 0,02 | |
| Vicat B [°C] | 171 | 173 | 172 | 193 | 183 |
| MVI [ml/10'] | 11,5 | 17,2 | 16,5 | n.b. | n.b. |
| ak, RT [kJ/m²] | 8,8 | 10,9 | 8,7 | 6,9 | 19 |
| E-Modul dry [MPa] | 3240 | 3190 | 3160 | 3050 | 2175 |
| E-Modul wet [MPa] | 3345 | 3270 | 3240 | 2380 | 1330 |
| spez. Oberflächenwiderstand [Ohm] | 4*10¹⁰ | 7*10⁹ | 2*10¹⁰ | 3*10¹² | 1*10¹³ |

## Patentansprüche

1. Thermoplastische Formmassen enthaltend
A) 40 bis 96,2 Gew.-% eines teilaromatischen Polyamids,
B) 2 bis 30 Gew.-% eines schlagzähmodifizierenden Polymeren, welches funktionelle Gruppen enthält,
C) 1 bis 50 Gew.-% faser- oder teilchenförmiger Füllstoffe oder deren Mischungen
D) 0,2 bis 5 Gew.-% eines Schmiermittels,
E) 0,5 bis 15 Gew.-% eines elektrisch leitfähigen Additivs,
F) 0 bis 30 Gew.-% weiterer Zusatzstoffe,
wobei die Summe der Gewichtsprozente der Komponenten A) bis F) 100 % ergibt.

2. Thermoplastische Formmassen nach Anspruch 1, in denen B) funktionelle Gruppen in Mengen von 0,1 bis 5 Gew.-%, bezogen auf 100 % B), enthält.

3. Thermoplastische Formmassen nach den Ansprüchen 1 oder 2, in denen die funktionellen Gruppen der Komponente B) aus Carbonsäure-, Carbonsäureanhydrid-, Carbonsäureester-, Carbonsäureamid-, Carbonsäureimid-, Amino-, Hydroxyl-, Epoxid-, Urethan- oder Oxazolingruppen oder deren Mischungen aufgebaut ist.

4. Thermoplastische Formmassen nach den Ansprüchen 1 bis 3, enthaltend als Komponente B) ein Copolymerisat aus
B₁₁) 35 bis 80 Gew.-% Ethylen,
B₁₂) 19,8 bis 63 Gew.-% 1-Octen oder 1-Buten oder Propylen oder deren Mischungen
B₄) 0,2 bis 2 Gew.-% einer ethylenisch ungesättigten Mono- oder Dicarbonsäure oder einem funktionellen Derivat einer solchen Säure.

5. Thermoplastische Formmassen nach den Ansprüchen 1 bis 4, enthaltend als Schmiermittel D) Ester oder Amide gesättigter oder ungesättigter aliphatischer Carbonsäuren mit 10 bis 40 C-Atomen mit aliphatischen gesättigten Alkoholen oder Aminen mit 2 bis 40 C-Atomen.

6. Thermoplastische Formmassen nach den Ansprüchen 1 bis 5, enthaltend als Komponente E) Carbonnanotubes oder Ruß oder Graphit oder deren Mischungen.

7. Verwendung der thermoplastischen Formmassen gemäß den Ansprüchen 1 bis 6 zur Herstellung von Fasern, Folien und Formkörpern jeglicher Art.

8. Fasern, Folien, Formkörper, erhältlich aus den thermoplastischen Formmassen gemäß den Ansprüchen 1 bis 6.

9. Formkörper gemäß Anspruch 8, **dadurch gekennzeichnet, dass** der Formkörper ein Kfz-Karosserieteil ist.

## Claims

1. A thermoplastic molding composition comprising
A) from 40 to 96.2% by weight of a semiaromatic polyamide,
B) from 2 to 30% by weight of an impact-modifying polymer which comprises functional groups,
C) from 1 to 50% by weight of fibrous or particulate fillers or a mixture of these,
D) from 0.2 to 5% by weight of a lubricant,
E) from 0.5 to 15% by weight of an electrically conductive additive,
F) from 0 to 30% by weight of other added materials,
where the total of the percentages by weight of components A) to F) is 100%.

2. The thermoplastic molding composition according to claim 1, in which B) comprises, based on 100% of B), amounts of from 0.1 to 5% by weight of functional groups.

3. The thermoplastic molding composition according to claim 1 or 2, in which the functional groups of component B) are composed of carboxylic acid groups, carboxylic anhydride groups, carboxylic ester groups, carboxamide groups, carboximide groups, amino groups, hydroxy groups, epoxy groups, urethane groups, or oxazoline groups, or a mixture of these.

4. The thermoplastic molding composition according to claims 1 to 3, comprising, as component B), a copolymer composed of
B₁₁) from 35 to 80% by weight of ethylene,
B₁₂) from 19.8 to 63% by weight of 1-octene or 1-butene or propylene or a mixture of these,
B₄) from 0.2 to 2% by weight of an ethylenically unsaturated mono- or dicarboxylic acid or of a functional derivative of such an acid.

5. The thermoplastic molding composition according to claims 1 to 4, comprising, as lubricant D), esters or amides of saturated or unsaturated aliphatic carboxylic acids having from 10 to 40 carbon atoms with saturated aliphatic alcohols or amines having from 2 to 40 carbon atoms.

6. The thermoplastic molding composition according to claims 1 to 5, comprising, as component E), carbon nanotubes or carbon black or graphite or a mixture of these.

7. The use of the thermoplastic molding compositions according to claims 1 to 6 for production of fibers, of foils, and of moldings of any type.

8. A fiber, a foil, or a molding, obtainable from the thermoplastic molding compositions according to claims 1 to 6.

9. A molding according to claim 8 which is a motor vehicle bodywork part.

## Revendications

1. Matières à mouler thermoplastiques contenant
A) de 40 à 96,2 % en poids d'un polyamide partiellement aromatique,
B) de 2 à 30 % en poids d'un polymère à modification antichoc, qui contient des groupes fonctionnels,
C) de 1 à 50 % en poids de charges particulaires ou fibreuses ou de mélanges de telles charges,
D) de 0,2 à 5 % en poids d'un lubrifiant,
E) de 0,5 à 15 % en poids d'un additif conducteur de l'électricité,
F) de 0 à 30 % en poids d'autres additifs,
la somme des pour cent en poids des composants A) à F) étant égale à 100 %.

2. Matières à mouler thermoplastiques selon la revendication 1, dans lesquelles B) contient des groupes fonctionnels en quantités de 0,1 à 5 % en poids, par rapport à 100 % de B).

3. Matières à mouler thermoplastiques selon la revendication 1 ou 2, dans lesquelles les groupes fonctionnels du composant B) consistent en des groupes acide carboxylique, anhydride d'acide carboxylique, ester d'acide carboxylique, carboxamido, carboximido, amino, hydroxy, époxyde, uréthanne ou oxazoline ou en des mélanges de ceux-ci.

4. Matières à mouler thermoplastiques selon les revendications 1 à 3, contenant en tant que composant B) un copolymère de
B₁₁) 35 à 80 % en poids d'éthylène,
B₁₂) 19,8 à 63 % en poids de 1-octène ou 1-butène ou propylène ou de mélanges de ceux-ci,
B₄) 0,2 à 2 % en poids d'un acide mono- ou dicarboxylique à insaturation éthylénique ou d'un dérivé fonctionnel d'un tel acide.

5. Matières à mouler thermoplastiques selon les revendications 1 à 4, contenant en tant que lubrifiant D) des esters ou amides d'acides carboxyliques aliphatiques saturés ou insaturés ayant de 10 à 40 atomes de carbone avec des alcools aliphatiques saturés ou amines aliphatiques saturées, ayant de 2 à 40 atomes de carbone.

6. Matières à mouler thermoplastiques selon les revendications 1 à 5, contenant en tant que composant E) des nanotubes de carbone ou du noir de carbone ou du graphite ou des mélanges de ceux-ci.

7. Utilisation des matières à mouler thermoplastiques selon les revendications 1 à 6, pour la production de fibres, films et corps moulés de tout type.

8. Fibres, films, corps moulés, pouvant être obtenus à partir des matières à mouler thermoplastiques selon les revendications 1 à 6.

9. Corps moulé selon la revendication 8, **caractérisé en ce que** le corps moulé est une pièce de carrosserie d'automobile.
